# EUROPEAN PATENT APPLICATION

(11) **EP 4 174 025 A1**
(43) Date of publication of application: **03.05.2023**
(21) Application number: 21877999.9
(22) Date of filing: 06.10.2021
(51) Int. Cl.: C01G 53/00, H01M 4/525, H01M 4/505, H01M 10/052

(54) **METHOD FOR PREPARING CATHODE ACTIVE MATERIAL FOR LITHIUM SECONDARY BATTERY AND CATHODE ACTIVE MATERIAL PREPARED THEREBY**

(30) Priority: 06.10.2020 KR 20200128547
(71) Applicant: Lg Chem, Ltd., Seoul 07336 (KR)
(72) Inventor: SHIM, Jong Hyun, Daejeon 34122 (KR); JEONG, Myung Gi, Daejeon 34122 (KR); SEO, You Kyong, Daejeon 34122 (KR); GU, Ye Hyeon, Daejeon 34122 (KR); JEONG, Jin Hoo, Daejeon 34122 (KR)
(74) Representative: Hoffmann Eitle
(86) International application number: PCT/KR2021/013710
(87) International publication number: WO 2022/075748

(57) **Abstract**

The present invention relates to a method of preparing a positive electrode active material for a lithium secondary battery which includes steps (1) to (3) below and a positive electrode active material for a lithium secondary battery which is prepared by the method.
(1) preparing a mixed solution by adding at least one first fuel selected from the group consisting of urea, glycine, carbohydrazide, oxalyldihydrazide, and hexamethylenetetramine, at least one second fuel selected from the group consisting of citric acid, oxalic acid, sucrose, glucose, and acetylacetone, and
a metal raw material including a lithium raw material, a nickel raw material, a cobalt raw material, and a manganese raw material to water and stirring the solution,
(2) heating the mixed solution to combust the mixed solution into a form of powder, and
(3) performing a heat treatment on the powder obtained in step (2).

## Description

### TECHNICAL FIELD

This application claims priority from Korean Patent Application No. 10-2020-0128547, filed on October 6, 2020, the disclosure of which is incorporated by reference herein.

The present invention relates to a method of preparing a positive electrode active material for a lithium secondary battery, a positive electrode active material prepared by the method, and a lithium secondary battery including the positive electrode active material.

### BACKGROUND ART

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

The lithium secondary battery may be largely divided into a positive electrode active material, a negative electrode active material, a separator, and an electrolyte solution. The negative electrode active material uses a carbon material as a main component, and, in addition, studies to use lithium metal, a sulfur compound, a silicon compound, or a tin compound have been actively conducted.

Also, a lithium metal oxide containing lithium is mainly used as the positive electrode active material, and a layered lithium metal oxide, such as a cobalt-based lithium metal oxide, a nickel-based lithium metal oxide, and a ternary lithium metal oxide in which cobalt, nickel, and manganese coexist, is mainly used.

A general method for preparing the layered lithium metal oxide is a method of preparing a precursor by adding an alkali and a metal salt containing a metal included in the positive electrode active material to water and precipitating the solution as a hydroxide of the metal. The method has a problem in that a preparation process is complicated and takes a long time, and a large amount of wastewater that may cause environmental pollution is generated by use of the alkali.

Furthermore, a conventional lithium metal oxide is generally in the form of a spherical secondary particle in which tens to hundreds of primary particles are aggregated. However, with respect to the lithium metal oxide in the form of a secondary particle in which many primary particles are aggregated as described above, there is a problem in that particle breakage, in which the primary particles fall off in a rolling process during preparation of a positive electrode, is easy to occur and cracks occur in the particles during charge and discharge. In a case in which the particle breakage of the positive electrode active material or the cracks occur, since a contact area with the electrolyte solution increases, gas generation and degradation of the active material due to a side reaction with the electrolyte solution are increased, and as a result, there is a problem in that life characteristics are degraded.

In order to solve these problems, a method of preparing a lithium metal oxide in the form of a single particle by increasing a sintering temperature during sintering of the precursor is also used, but, in this case, since a size of a primary particle is relatively larger than that of the lithium metal oxide in the form of a secondary particle and an interface between the primary particles, which becomes a diffusion path of lithium ions, is small, initial resistance is high due to low lithium mobility, and, since it is prepared at a relatively high sintering temperature, a lithium by-product is increased and is easily changed to an electrochemically inactive rock salt phase, and thus, there is another problem in that surface resistance is increased.

Therefore, a method of preparing a positive electrode active material to solve this problem has been variously studied.

### DISCLOSURE OF THE INVENTION

### TECHNICAL PROBLEM

An aspect of the present invention provides a method of preparing a positive electrode active material which may reduce processing time in comparison to the related art.

Another aspect of the present invention provides a positive electrode active material in the form of a single particle which may be prepared at a relatively low sintering temperature.

### TECHNICAL SOLUTION

According to an aspect of the present invention, there is provided a method of preparing a positive electrode active material for a lithium secondary battery which includes:
(1) preparing a mixed solution by adding at least one first fuel selected from the group consisting of urea, glycine, carbohydrazide, oxalyldihydrazide, and hexamethylenetetramine; at least one second fuel selected from the group consisting of citric acid, oxalic acid, sucrose, glucose, and acetylacetone; and
   a metal raw material including a lithium raw material, a nickel raw material, a cobalt raw material, and a manganese raw material to water and stirring the solution,
(2) heating the mixed solution to combust the mixed solution into a form of powder, and
(3) performing a heat treatment on the powder obtained in step (2).

According to another aspect of the present invention, there is provided a positive electrode active material for a lithium secondary battery which is prepared according to the above preparation method.

According to another aspect of the present invention, there is provided a lithium secondary battery which includes a positive electrode including the positive electrode active material; a negative electrode; a separator disposed between the positive electrode and the negative electrode; and an electrolyte.

### ADVANTAGEOUS EFFECTS

Since a precursor forming step is omitted in a method of preparing a positive electrode active material according to the present invention, it is advantageous in that processing time is reduced.

Also, in the related art, a heat treatment at 850°C or higher was required in a precursor sintering step in order to prepare a positive electrode active material in the form of a single particle, but, according to the present invention, there is an advantage in that the positive electrode active material in the form of a single particle may be prepared at a temperature lower than 850°C.

Furthermore, since formation of a rock salt phase on a surface is prevented by reducing a sintering temperature, resistance and capacity characteristics are improved, a cation mixing phenomenon occurring during phase transition is prevented, and an amount of gas generated due to a side reaction with an electrolyte solution may be reduced by reducing an amount of lithium by-product.

Also, a shape and a growth direction of positive electrode active material particles may be adjusted according to a type of fuel used and there is an advantage in preparing a single particle having a large particle size.

### BRIEF DESCRIPTION OF THE DRAWINGS

FIG. 1 is a low magnification transmission electron microscope (TEM) image of a positive electrode active material prepared in Example 1 of the present invention;
FIG. 2 is a high magnification TEM image and a selected area electron diffraction (SAED) pattern of the positive electrode active material prepared in Example 1 of the present invention;
FIG. 3 is a scanning electron microscope (SEM) image of the positive electrode active material prepared in Example 1 of the present invention;
FIG. 4 is an SEM image of a positive electrode active material prepared in Comparative Example 1 of the present invention;
FIG. 5 is a diagram illustrating the results of capacity retention evaluation experiment performed in Experimental Example 1 of the present invention; and
FIG. 6 is a diagram illustrating the results of gas generation rate evaluation experiment performed in Experimental Example 2 of the present invention.

### MODE FOR CARRYING OUT THE INVENTION

Hereinafter, the present invention will be described in more detail to allow for a clearer understanding of the present invention.

In the present specification, the expression "average particle diameter (D₅₀)" may be defined as a particle diameter at 50% of particle size distribution, wherein the average particle diameter (D₅₀), for example, may be measured by using a laser diffraction method, and, specifically, after the positive electrode active material is dispersed in a solution, the solution is introduced into a commercial laser diffraction particle size measurement instrument (e.g., Microtrac MT 3000) and irradiated with ultrasonic waves having a frequency of about 28 kHz and an output of 60 W, and the average particle diameter (D₅₀) at 50% of the particle size distribution may then be calculated by the measurement instrument.

In the present specification, the expression "primary particle" denotes a smallest particle unit which is distinguished as one body when a cross section of a positive electrode active material is observed through a scanning electron microscope (SEM), wherein it may be composed of a single grain, or may also be composed of a plurality of grains. Specifically, an average particle diameter of the primary particle may be measured by measuring a size of each particle distinguished from a cross-sectional SEM image of the positive electrode active material particles and then calculating an arithmetic average value thereof.

In the present specification, the expression "secondary particle" denotes a secondary structure formed by aggregation of a plurality of primary particles. An average particle diameter of the secondary particle may be measured through the above-described laser diffraction method.

In the present specification, the expression "single particle" is a term used to distinguish it from positive electrode active material particles in the form of a secondary particle formed by aggregation of tens to hundreds of primary particles which have been conventionally and generally used, wherein it is a concept including a single particle composed of one primary particle and an aggregate particle of 10 or less primary particles.

Conventionally, a positive electrode active material was generally prepared in such a manner that a precursor was prepared by adding a basic material to an aqueous solution containing a metal salt and precipitating the solution as a hydroxide of the metal, and the precursor was dry mixed with a lithium source, a doping source, and a coating source to be subjected to a high-temperature heat treatment.

In this case, the precursor was mainly composed of spherical secondary particles which were formed by aggregation of primary particles of a few nm to a few tens of nm, and, in order to change the secondary particle into a single particle form, there was a need for a process to perform high-temperature sintering at 850°C or higher, to perform sintering several times at a relatively low temperature, or to reduce the sintering temperature by adding a flux material.

In a case in which the sintering temperature is increased to form a single particle as described above, since phase transition occurs in which a conventional layered structure is changed to a spinel structure and the spinel structure is changed to a rock salt phase structure, there is a disadvantage in that resistance properties of the single particle itself are deteriorated due to the electrochemically inactive rock salt phase. In addition, since deintercalation of lithium ions occurs in the phase transition process to cause a phenomenon of substituting a lithium layer with nickel ions, that is, cation mixing, this leads to degradation of a positive electrode material and lithium byproducts, such as Li₂CO₃ and LiOH, are also relatively increased due to the deintercalation of the lithium ions, and thus, there is a problem in that an amount of gas generated is increased due to a side reaction with an electrolyte solution when the positive electrode active material is used as the positive electrode material in a lithium secondary battery.

In contrast, since a method of preparing a positive electrode active material for a lithium secondary battery according to the present invention includes a combustion reaction from a solution state to a powder state through a gel state, there is an advantage in that a positive electrode active material in the form of a single particle may be prepared even at a temperature of 700°C to 800°C. That is, since the method of preparing a positive electrode active material for a lithium secondary battery according to the present invention may prevent the phase transition to the rock salt phase and may reduce the cation mixing phenomenon and an amount of the lithium by-product, the positive electrode active material may contribute to improvement of resistance and stability as the positive electrode material of the lithium secondary battery.

Also, in a case in which a particle size is increased while applying conventional high-temperature sintering to form a single particle, since a high temperature of 900°C or higher is required, there is a disadvantage that it is difficult to apply to an actual process, but, according to the present invention, there is an advantage that single particles with a large particle size may be formed at a relatively low temperature.

Furthermore, in the present invention, since a lithium raw material and a transition metal raw material are simultaneously added and mixed, a uniform positive electrode active material may be prepared without aggregation of lithium.

Particularly, the present inventors have confirmed that a size, a shape, and a degree of dispersion of positive electrode active material particles may be easily controlled when two or more types of fuels are used together as a fuel used in the combustion reaction, and have found that, among them, in a case in which at least one first fuel selected from the group consisting of urea, glycine, carbohydrazide, oxalyldihydrazide, and hexamethylenetetramine and at least one second fuel selected from the group consisting of citric acid, oxalic acid, sucrose, glucose, and acetylacetone are used together as the fuel, particles having a uniform shape may be obtained at a relatively low processing temperature.

The method of preparing a positive electrode active material for a lithium secondary battery according to the present invention includes the following steps (1) to (3), and each step will be described in more detail below.

### (1) Step of Preparing Mixed Solution

Step (1) is a step of preparing a mixed solution by adding a first fuel, a second fuel, and a metal raw material to water and stirring the solution.

Specifically, the first fuel may be selected from the group consisting of urea, glycine, carbohydrazide, oxalyldihydrazide, and hexamethylenetetramine, and the second fuel may be selected from the group consisting of citric acid, oxalic acid, sucrose, glucose, and acetylacetone.

Preferably, the first fuel may be urea, and the second fuel may be citric acid.

The first fuel including urea is decomposed in water to generate an amino functional group, wherein, since the amino functional group amplifies combustion through a redox reaction, it is advantageous in that processing temperature may be reduced. However, in a case in which the first fuel is used alone as the fuel, it is disadvantageous in that it is difficult to control a size and a shape of positive electrode active material nanoparticles. The second fuel including citric acid may compensate for this, wherein the second fuel generates a carboxylic functional group during decomposition, the carboxylic functional group allows components of the mixed solution to be firmly combined due to a strong binding force, and, through this, positive electrode active material nanoparticles having relatively constant size and shape may be prepared.

Also, since the first fuel is decomposed to form ammonia, a pH of the mixed solution containing the same is increased, wherein it has an advantage of causing gelation of the solution and amplifying the combustion reaction. However, since precipitation of metal hydroxide in the solution may occur if the pH is excessively increased, an adverse effect of reducing efficiency of the combustion reaction may occur. If the second fuel is added to compensate for this, carboxylic acid anions decomposed from the second fuel reduce the pH to create a suitable pH for the combustion reaction.

In the present invention, a weight ratio of the first fuel to the second fuel may be in a range of 60:40 to 90:10, preferably 70:30 to 90:10, and more preferably 75:35 to 85:15. In this case, the above-described effect of combination of the first fuel and the second fuel may be obtained to the maximum.

An amount of gas generated in a combustion process of step (2) to be described later is proportional to an amount of the fuel added, wherein, when the first fuel and the second fuel are used together, a pressure of the gas generated is increased as a weight of the first fuel is increased.

The metal raw material of the present invention includes a lithium raw material, a nickel raw material, a cobalt raw material, and a manganese raw material.

The lithium raw material may be lithium-containing sulfates, nitrates, acetic acid salts, carbonates, oxalates, citrates, halides, hydroxides, oxyhydroxides, or a combination thereof, and is not particularly limited as long as it may be dissolved in water.

Specifically, the lithium raw material may be at least one selected from Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, or Li₃C₆H₅O₇, and may preferably be LiNO₃. However, the lithium raw material is not limited thereto.

The nickel raw material in the present invention, for example, may be nickel-containing acetic acid salts, nitrates, sulfates, halides, sulfides, hydroxides, oxides, oxyhydroxides, or a combination thereof, may specifically be at least one selected from Ni(OH)₂, NiO, NiOOH, NiCO₃·2Ni(OH)₂·4H₂O, NiC₂O₂·2H₂O, Ni(NO₃)₂·6H₂O, NiSO₄, NiSO₄·6H₂O, a fatty acid nickel salt, and a nickel halide, and may preferably be Ni(NO₃)₂·6H₂O. However, the nickel raw material is not limited thereto.

The cobalt raw material in the present invention may be cobalt-containing acetic acid salts, nitrates, sulfates, halides, sulfides, hydroxides, oxides, or oxyhydroxides, may specifically be at least one selected from Co(OH)₂, CoOOH, Co(OCOCH₃)₂·4H₂O, Co(NO₃)₂·6H₂O, CoSO₄, and Co(SO₄)₂·7H₂O, and may preferably be Co(NO₃)₂·6H₂O. However, the cobalt raw material is not limited thereto.

The manganese raw material in the present invention, for example, may be manganese-containing acetic acid salts, nitrates, sulfates, halides, sulfides, hydroxides, oxides, oxyhydroxides, or a combination thereof, may specifically be at least one selected from a manganese oxide such as Mn₂O₃, MnO₂, and Mn₃O₄; a manganese salt such as MnCO₃, Mn(NO₃)₂·6H₂O, MnSO₄, manganese acetate, manganese dicarboxylate, manganese citrate, and a fatty acid manganese salt; a manganese oxyhydroxide; and manganese chloride, and may preferably be Mn(NO₃)₂·6H₂O. However, the manganese raw material is not limited thereto.

A composition of the positive electrode active material finally prepared may be adjusted by adjusting concentrations of the lithium raw material, the nickel raw material, the cobalt raw material, and the manganese raw material, and the metal raw material may further include a doping raw material, if necessary.

A total amount of the first fuel and the second fuel in step (1) may be in a range of 20 wt% to 60 wt%, for example, 30 wt% to 50 wt% based on a total amount of the metal raw material. When the amount of the fuel is within the above range, it is desirable in terms of obtaining an adequate primary pre-sintering effect due to sufficient combustion and an appropriate yield of the final positive electrode active material. In a case in which the amount of the fuel is less than 10 wt%, since combustion does not occur sufficiently, it is difficult to prepare a positive electrode active material in the form of a single particle, and, in a case in which the amount of the fuel is greater than 90 wt%, the yield of the final positive electrode active material may be significantly reduced.

The amount of the metal raw material in step (1) may be in a range of 15 wt% to 50 wt%, preferably 25 wt% to 45 wt%, and more preferably 30 wt% to 40 wt% based on a total amount of the mixed solution. When the amount of the metal raw material is within the above range, it is desirable in terms of being able to prepare a uniform initial solution. In a case in which the amount of the metal raw material is less than 15 wt%, an amount of the positive electrode active material, which may be finally obtained, may be small, and, in a case in which the amount of the metal raw material is greater than 50 wt%, since the solution initially prepared is not uniformly dissolved, it is difficult to finally obtain a uniform positive electrode active material.

A remainder of the mixed solution excluding the fuel and the metal raw material may be water, such as distilled water, unless otherwise specified.

In the present invention, the stirring of the mixed solution may be performed at a temperature of 40°C to 60°C for 30 minutes to 60 minutes, but the present invention is not limited thereto.

### 2) Step of Heating the Mixed Solution to Combust the Mixed Solution into a Form of Powder

Step (2) is a step in which, after the above-described mixed solution is made into a state of a gel by evaporating moisture while heating the mixed solution using a hot plate, heat is continuously applied to cause a combustion reaction in the gel to change the gel into a form of powder.

The heating of step (2) is performed at a temperature of 300°C to 500°C, for example, 300°C to 400°C. In a case in which the heating temperature of step (2) is less than 300°C, it is difficult to cause spontaneous combustion.

### (3) Step of Performing Heat Treatment on the Powder

Step (3) is a step in which the powder obtained in step (2) is changed into positive electrode active material particles with electrochemical properties as a battery material by performing a heat treatment on the powder, that is, by heat treating single particles in an incomplete state due to the previous combustion, i.e., particles in a state in which a nickel oxide phase is mixed without forming a complete layered crystalline phase although the particles may be in the form of single particles.

Specifically, after drying the powder obtained in step (2), the powder is ground into finer powder using a mortar, and a step of performing a heat treatment on the finer powder is performed.

The heat treatment of step (3) is performed at a temperature of 700°C to 800°C, wherein, in a case in which the heat treatment temperature is less than 700°C, the layered crystalline phase that allows function as a positive electrode active material may not be properly formed, and, in a case in which the heat treatment temperature is greater than 800°C, since possibility of forming the rock salt crystalline phase, which is formed in a process of degradation of the positive electrode active material, is increased, this may lead to a decrease in capacity and lifetime of the battery including the same.

### Positive Electrode Active Material

The positive electrode active material for a lithium secondary battery of the present invention is prepared according to the above-described method of preparing a positive electrode active material for a lithium secondary battery.

The positive electrode active material includes single particles having an average particle diameter (D₅₀) of 0.5 um to 2.5 um, for example, 1 um to 2 um. Whether or not the single particles are included may be confirmed through SEM, transmission electron microscope (TEM), or electron backscatter diffraction (EBSD) analysis.

In a case in which the positive electrode active material includes single particles having an average particle diameter (D₅₀) within the above range, it is desirable in terms of increasing the capacity due to a large surface area. Also, since a degree of degradation of the positive electrode active material may be slowed down due to the form of a single particle, it is desirable for increasing the lifetime.

The positive electrode active material may be a lithium composite transition metal oxide represented by Formula 1 below.

[Formula 1] Li₁₊ₓ(NiₐCo_{b}Mn_{c}M_{d})O₂

In Formula 1,
M is at least one selected from tungsten (W), copper (Cu), iron (Fe), vanadium (V), chromium (Cr), titanium (Ti), zirconium (Zr), zinc (Zn), aluminum (Al), indium (In), tantalum (Ta), yttrium (Y), lanthanum (La), strontium (Sr), gallium (Ga), scandium (Sc), gadolinium (Gd), samarium (Sm), calcium (Ca), cerium (Ge), niobium (Nb), magnesium (Mg), boron (B), and molybdenum (Mo), and
x, a, b, c, and d are atomic fractions of each independent elements,
wherein 0≤x≤0.20, 0.50≤a≤0.95, 0.025≤b≤0.25, 0.025≤c≤0.25, 0≤d≤0.05, and a+b+c+d=1.

### Lithium Secondary Battery

The lithium secondary battery of the present invention includes a positive electrode including the positive electrode active material; a negative electrode; a separator disposed between the positive electrode and the negative electrode; and an electrolyte, and may be prepared by a conventional preparation method known in the art, except for using the positive electrode active material according to the present invention.

The positive electrode according to the present invention includes the above positive electrode active material, and may be prepared by coating a positive electrode collector with a positive electrode slurry including the positive electrode active material, a binder, a conductive agent, and a solvent, and then drying and rolling the coated positive electrode collector.

The positive electrode collector is not particularly limited as long as it has conductivity without causing adverse chemical changes in the battery, and, for example, stainless steel; aluminum; nickel; titanium; fired carbon; or aluminum or stainless steel that is surface-treated with one of carbon, nickel, titanium, silver, or the like may be used.

The binder is a component that assists in the binding between the active material and the conductive agent and in the binding with the current collector, wherein the binder is commonly added in an amount of 1 wt% to 30 wt% based on a total weight of solid content in the positive electrode slurry. Examples of the binder may be polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene termonomer, a styrene-butadiene rubber, or a fluorine rubber.

Also, the conductive agent is a material providing conductivity without causing adverse chemical changes in the battery, wherein it may be added in an amount of 1 wt% to 20 wt% based on the total weight of the solid content in the positive electrode slurry.

Examples of the conductive agent may be a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives.

Furthermore, the solvent of the positive electrode slurry may include an organic solvent, such as N-methyl-2-pyrrolidone (NMP), and may be used in an amount such that desirable viscosity is obtained when the positive electrode active material, the binder, and the conductive agent are included. For example, the solvent may be included in an amount such that a concentration of the solid content in the positive electrode slurry including the positive electrode active material, the binder, and the conductive agent is in a range of 10 wt% to 90 wt%, for example, 10 wt% to 50 wt%.

The negative electrode according to the present invention includes a negative electrode active material, and may be prepared by coating a negative electrode collector with a negative electrode slurry including the negative electrode active material, a binder, a conductive agent, and a solvent, and then drying and rolling the coated negative electrode collector.

The negative electrode collector generally has a thickness of 3 um to 500 um. The negative electrode collector is not particularly limited so long as it has high conductivity without causing adverse chemical changes in the battery, and, for example, copper; stainless steel; aluminum; nickel; titanium; fired carbon; copper or stainless steel that is surface-treated with one of carbon, nickel, titanium, silver, or the like; an aluminum-cadmium alloy, or the like may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.

Furthermore, the negative electrode active material may include at least one selected from a carbon material capable of reversibly intercalating/deintercalating lithium ions; metal or an alloy of lithium and the metal; a metal composite oxide; a material which may be doped and undoped with lithium; lithium metal; and a transition metal oxide.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon), hard carbon, mesophase pitch carbide, or fired cokes.

As the metal or the alloy of lithium and the metal, a metal selected from the group consisting of copper (Cu), nickel (Ni), sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn), or an alloy of lithium and the metal may be used.

One selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0≤x≤1), LiₓWO₂ (0≤x≤1), and SnₓMe₁₋ₓMe'_{y}O_{z} (Me: manganese (Mn), Fe, Pb, or Ge; Me': Al, B, phosphorus (P), Si, Groups I, II and III elements of the periodic table, or halogen; 0≤x≤1; 1≤y≤3; 1≤z≤8) may be used as the metal composite oxide.

The material, which may be doped and undoped with lithium, may include Si, SiOₓ (0<x≤2), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO₂, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO₂ and at least one thereof may also be used. The element Y may be selected from the group consisting of Mg, Ca, Sr, Ba, Ra, Sc, Y, Ti, Zr, hafnium (Hf), rutherfordium (Rf), V, Nb, Ta, dubnium (Db), Cr, Mo, W, seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, Ga, Sn, In, Ge, P, arsenic (As), Sb, bismuth (Bi), sulfur (S), selenium (Se), tellurium (Te), polonium (Po), and a combination thereof.

Examples of the transition metal oxide may be lithium-containing titanium composite oxide (LTO), vanadium oxide, or lithium vanadium oxide.

The negative electrode active material may be included in an amount of 80 wt% to 99 wt% based on a total weight of solid content in the negative electrode slurry.

The binder is a component that assists in the binding between the conductive agent, the active material, and the current collector, wherein the binder is commonly added in an amount of 1 wt% to 30 wt% based on the total weight of the solid content in the negative electrode slurry. Examples of the binder may be polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer, a styrene-butadiene rubber, or a fluorine rubber.

The conductive agent is a component for further improving the conductivity of the negative electrode active material, wherein the conductive agent may be added in an amount of 1 wt% to 20 wt% based on the total weight of the solid content in the negative electrode slurry. Any conductive agent may be used without particular limitation so long as it has conductivity without causing adverse chemical changes in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, or nickel powder; conductive whiskers such as zinc oxide whiskers or potassium titanate whiskers; conductive metal oxide such as titanium oxide; or polyphenylene derivatives, may be used.

The solvent of the negative electrode slurry may include water; or an organic solvent such as NMP and alcohol, and may be used in an amount such that desirable viscosity is obtained when the negative electrode active material, the binder, and the conductive agent are included. For example, the solvent may be included in an amount such that a concentration of the solid content in the negative electrode slurry including the negative electrode active material, the binder, and the conductive agent is in a range of 30 wt% to 80 wt%, for example, 40 wt% to 70 wt%.

The separator of the present invention separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte solution and excellent stability as well as low resistance to the transfer of electrolyte solution ions may be used.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer; or a laminated structure having two or more layers thereof may be used as the separator. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be used.

The electrolyte of the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C₂-C₂₀ hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN (C₂F₅SO₃)₂, LiN (C₂F₅SO₂)₂, LiN (CF₃SO₂)₂, LiCl, LiI, or LiB(C₂O₄)₂ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further added to the electrolyte in addition to the electrolyte components. In this case, the additive may be included in an amount of 0.1 wt% to 5 wt% based on a total weight of the electrolyte.

Since the lithium secondary battery including the positive electrode active material according to the present invention exhibits improved performance in comparison to a conventional positive electrode active material in terms of gas generation rate and lifetime, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided. The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

Hereinafter, examples of the present invention will be described in detail in such a manner that it may easily be carried out by a person with ordinary skill in the art to which the present invention pertains.

### <Example and Comparative Example: Preparation of Positive Electrode Active Material>

### Example 1

Urea and citric acid were added as a fuel to distilled water in a weight ratio of 80:20 and then mixed until completely dissolved. LiNO₃, Ni(NO₃)₂·6H₂O, Co(NO₃)₂·6H₂O, Mn(NO₃)₂·6H₂O, and Al(NO₃)₃·9H₂O, as a metal raw material, were added to the aqueous solution, in which the fuel was completely dissolved, and were stirred until completely dissolved. In this case, LiNO₃ was added so that a Li/M molar ratio, which was a ratio of the number of moles of lithium to a total number of moles of metals (M) except lithium, that is, nickel, cobalt, manganese, and aluminum, was 1.07, and nickel, cobalt, manganese, and aluminum were added so that a molar ratio between nickel, cobalt, manganese, and aluminum was 86:5:7:2. Also, an amount of the fuel was 40 wt% based on a total amount of the metal raw material. After the stirred solution was heated at 380°C using a hot plate to evaporate all moisture, a spontaneous combustion reaction was allowed to occur.

After powder obtained after the combustion reaction was ground into fine particles, the fine particles were sintered at 800°C for 10 hours in an oxygen atmosphere, then disintegrated, and sieved to prepare a positive electrode active material.

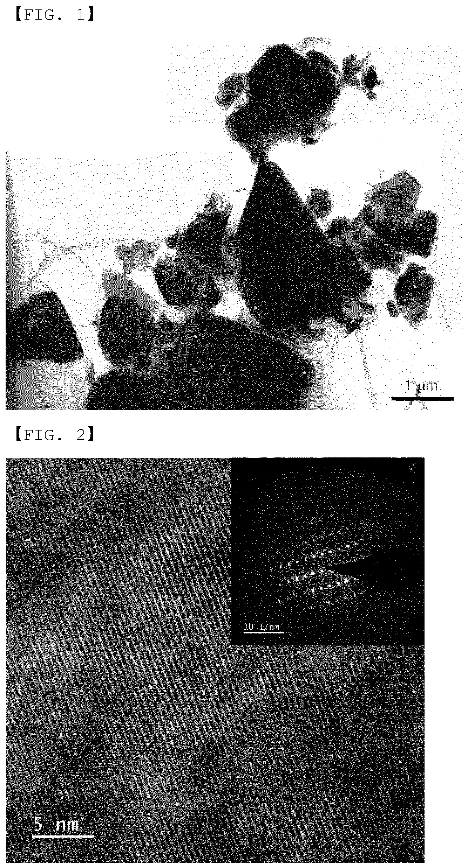

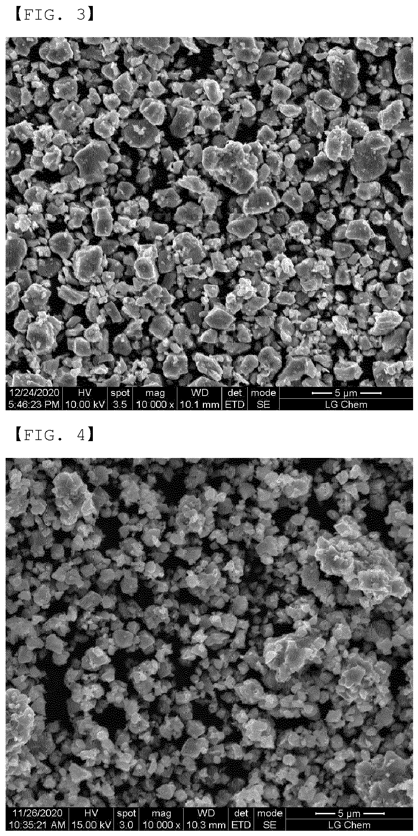

An average particle diameter (D₅₀) of the prepared positive electrode active material was 2 um. Also, a low magnification transmission electron microscope (TEM) image was illustrated in FIG. 1, a high magnification TEM image and a selected area electron diffraction (SAED) pattern was illustrated in FIG. 2, and a scanning electron microscope (SEM) image was illustrated in FIG. 3. According to FIGS. 1 through 3, it may be confirmed that the positive electrode active material prepared in Example 1 had a single phase with little aggregation between particles.

### Comparative Example 1

A positive electrode active material was prepared in the same manner as in Example 1 except that urea, instead of urea and citric acid, was used alone as a fuel. An average particle diameter (D₅₀) of the prepared positive electrode active material was 3 µm, and an image observed with a scanning electron microscope (SEM) was illustrated in FIG. 4. In FIG. 4, it may be confirmed that a large number of secondary particles, which were formed by aggregation of many primary particles due to non-uniform particle growth caused by rapid combustion of the fuel, were observed.

### [Experimental Example 1: Lifetime Evaluation]

Each of the positive electrode active materials prepared in Example 1 and Comparative Example 1, a conductive agent (carbon black), and a binder (polyvinylidene fluoride, PVdF) were mixed in an N-methylpyrrolidone (NMP) solvent at a weight ratio of 95:2.2:2.8 to prepare a positive electrode slurry (solid content: 16 wt%).

Next, after an aluminum (Al) foil, as a positive electrode collector, was attached flat on a flat glass substrate so that air did not enter, the prepared slurry was coated on the Al foil using a stainless steel spatula. After the slurry coated Al foil was put in a dryer at 90°C to 120°C and dried for 15 minutes, the slurry coated Al foil dried was prepared as a circular positive electrode sample with a diameter of 14 mm using a punching machine. The positive electrode sample was rolled in an electric rolling mill so that total porosity was adjusted to 24%. A coin half-cell was assembled in the following order. After the prepared circular positive electrode was put into a coin cell can and an electrolyte solution was injected, a gasket, a separator, lithium, a spacer, and a washer were sequentially stacked on the can. In this case, one, in which 1.0 M LiPF₆, 3 wt% vinylene carbonate (VC), 0.5 wt% 1,3-propanesultone (PS), and 1 wt% ethylene sulfate (Esa) were dissolved in a mixed organic solvent in which ethylenecarbonate (EC):ethylmethyl carbonate (EMC):dimethyl carbonate (DMC) were mixed in a volume ratio of 3:3:4, was used as the electrolyte solution. Finally, the coin half-cell was completed by putting a cap thereon and attaching the cap with a manual crimper to remove air bubbles inside.

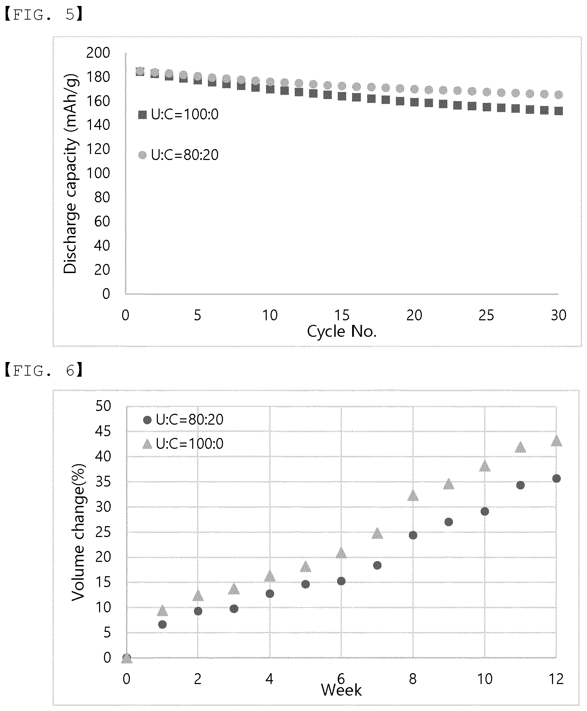

Lifetime evaluation was performed on the prepared coin half-cell in a voltage range of 2.5 V to 4.25 V and at a temperature of 45°C. In a first cycle, charge and discharge were performed at 0.2 C, charge and discharge were performed at 0.5 C and 1.0 C, respectively, during a total of 30 cycles from a 2^{nd} cycle to a 31^{st} cycle, and a change in capacity according to cycles was illustrated in FIG. 5.

According to FIG. 5, it may be confirmed that the positive electrode active material prepared in Example 1 using the mixture of urea and citric acid as the fuel during the preparation of the positive electrode active material was more effective in improving life characteristics of the battery in comparison to the positive electrode active material prepared in Comparative Example 1 using urea alone.

### [Experimental Example 2: Gas Generation Rate Evaluation]

Lithium secondary batteries, in which the positive electrode active materials of Example 1 and Comparative Example 1 were respectively used, were prepared in the same manner as in Experimental Example 1 and were then fully charged to 100% at 0.33 C to 4.3 V. After three positive electrodes separated after disassembling the charged batteries were put in a pouch and the electrolyte solution of Experimental Example 1 was additionally injected, a change in volume of the pouch, which occurred during storage in an oven at 60°C for 12 weeks, was measured in units of 1 week. Specifically, using the Archimedes principle using a change in buoyancy generated when the volume of the pouch was changed, a change in mass of the pouch was measured in water and then converted into a volume change, and the volume change was illustrated in FIG. 6.

According to FIG. 6, it may be confirmed that the positive electrode active material prepared in Example 1 using the mixture of urea and citric acid as the fuel during the preparation of the positive electrode active material was more effective in reducing a gas generation rate of the battery during high-temperature storage in comparison to the positive electrode active material prepared in Comparative Example 1 using urea alone.

## Claims

1. A method of preparing a positive electrode active material for a lithium secondary battery, the method comprising steps of:
(1) preparing a mixed solution by adding at least one first fuel selected from the group consisting of urea, glycine, carbohydrazide, oxalyldihydrazide, and hexamethylenetetramine; at least one second fuel selected from the group consisting of citric acid, oxalic acid, sucrose, glucose, and acetylacetone; and
a metal raw material including a lithium raw material, a nickel raw material, a cobalt raw material, and a manganese raw material to water and stirring the solution;
(2) heating the mixed solution to combust the mixed solution into a form of powder; and
(3) performing a heat treatment on the powder obtained in step (2).

2. The method of claim 1, wherein the first fuel is urea, and the second fuel is citric acid.

3. The method of claim 1, wherein a weight ratio of the first fuel to the second fuel is in a range of 60:40 to 90:10.

4. The method of claim 1, wherein a weight ratio of the first fuel to the second fuel is in a range of 70:30 to 90:10.

5. The method of claim 1, wherein a total amount of the first fuel and the second fuel in step (1) is in a range of 20 wt% to 60 wt% based on a total amount of the metal raw material.

6. The method of claim 1, wherein the heating of step (2) is performed at a temperature of 300°C to 500°C.

7. The method of claim 1, wherein the heat treatment of step (3) is performed at a temperature of 700°C to 800°C.

8. A positive electrode active material for a lithium secondary battery, the positive electrode active material prepared according to the method of any one of claims 1 to 7.

9. The positive electrode active material for a lithium secondary battery of claim 8, wherein the positive electrode active material comprises single particles having an average particle diameter (D₅₀) of 0.5 um to 2.5 µm.

10. A lithium secondary battery, comprising:
a positive electrode including the positive electrode active material of claim 8;
a negative electrode;
a separator disposed between the positive electrode and the negative electrode; and
an electrolyte.
